# EUROPÄISCHE PATENTSCHRIFT

(11) **EP 1 309 441 B1**
(45) Veröffentlichungstag und Bekanntmachung des Hinweises auf die Patenterteilung: **03.03.2004**
(21) Anmeldenummer: 01949495.4
(22) Anmeldetag: 14.07.2001
(51) Int. Cl.: B29C 65/00, B29C 65/06

(54) **REIBSCHWEISSVERBINDUNG VON BAUTEILEN AUS THERMOPLASTISCHEM KUNSTSTOFF MIT SCHWEISSGRATSPEICHER**
FRICTION WELD JOINT FOR COMPONENTS MADE OF THERMOPLASTIC PLASTIC COMPRISING A WELDING BURR RESERVOIR
LIAISON PAR SOUDAGE PAR FRICTION DE COMPOSANTS EN PLASTIQUE THERMOPLASTIQUE AVEC RESERVOIR A BAVURES DE SOUDAGE

(30) Priorität: 17.08.2000 DE 10040311
(43) Veröffentlichungstag der Anmeldung: 14.05.2003
(73) Patentinhaber: Braun GmbH, 61476 Kronberg (DE)
(72) Erfinder: REICK, Hansjörg, 61449 Steinbach (DE)
(86) Internationale Anmeldenummer: PCT/EP2001/008137
(87) Internationale Veröffentlichungsnummer: WO 2002/014052

(56) Entgegenhaltungen:
- US-A- 4 919 987

## Beschreibung

### Fachgebiet der Erfindung

Die Erfindung betrifft eine Reibschweißverbindung zum Verbinden von Bauteilen aus thermoplastischem Kunststoff gemäß dem Oberbegriff des Patentanspruchs 1 und ein Verfahren zu deren Herstellung.

### Technische Hintergrund

Eine Art der Zusammenführung von Bauteilen aus thermoplastischem Kunststoff ist das Reibschweißen. Beim Reibschweißen wird ein Bauteil festgehalten und ein anderes gegenüber diesem mit verhältnismäßig hoher Geschwindigkeit und unter Druck bewegt. Durch die an den Berührflächen der Bauteile dadurch entstehende Reibungswärme wird das Kunststoffmaterial in der Schweißzone verflüssigt. Nach Beendigung der Reibbewegung werden die Bauteile nach Erkalten des plastifizierten Materialanteils fest miteinander verbunden. Bei rotationsymmetrischen Bauteilen bzw. bei solchen mit ringförmigen Verbindungsstellen kann das bewegte Bauteil relativ zu dem festgehaltenen Bauteil gedreht, andernfalls in Schwingungen von zum Beispiel 100 Hertz versetzt werden.

Beispiele für derartige Reibschweißverbindungen bzw. für Verfahren zu deren Herstellung sind in den Patentschriften DE 42 44 017 A1, GB 2,217,255, EP 204 448 B1, US 4,944,977 (Schantz et al.), US 4,457,795 (Mason et al.), US 4,919,987 (Manner), US 4,243,448 (Fagniart et al.), US 4,119,334 (Steed) und US 4,154,641 (Hotton) offenbart und beschrieben.

Bei Reibschweißverbindungen von Bauteilen aus thermoplastischem Kunststoff, wie beispielsweise Polypropylen oder dem verhältnismäßig harten, einen Schmelzpunkt oberhalb von 250° Celsius aufweisenden Polyamid, besteht in der Praxis die Schwierigkeit, daß in der Schweißzone kleine, einige hundertstel Millimeter dicke und bis mehrere Millimeter lange span- oder haarförmige Partikel entstehen. Diese Partikel oder Späne werden aus der Schweißzone als feste Bestandteile ausgetrieben bzw. weggeschleudert. Wenn Behälter oder andere Bauteile mit Hohlräumen aus thermoplastischen Kunststoffbauteilen durch Reibschweißen zusammengesetzt werden sollen, so fällt ein Teil der während des Schweißvorgangs entstehenden Späne in das Behälterinnere, aus dem sie dann nur umständlich und unter hohen Kosten ausgespült oder abgesaugt werden können. Dies gilt insbesondere, wenn das Behälterinnere kompliziert aufgebaut ist, also zum Beispiel Prallwände, Trennwände, Rippen oder Kammern aufweist. Aber gerade dann, wenn das Behälterinnere nicht einfach glatt ist, sondern mit Rippen, Prallwänden, Kammern oder dergleichen versehen ist, wird der Behälter aus mehreren Teilen zusammengesetzt, weil er andernfalls einfacher nach dem Blasverfahren hergestellt werden könnte. Werden solche Behälter mit in ihrem Inneren befindlichen, von der Schweißverbindung herrührenden Spänen in Kreisläufen mit Sieben, Ventilen, Düsen, Reglern oder dergleichen Engstellen eingesetzt, gelangen die Späne in diese Engstellen und machen sie und damit den gesamten Kreislauf in kurzer Zeit unbrauchbar. Das gleiche gilt für mechanische Kupplungen oder Verzahnungen, die durch entsprechende Späne blockiert werden können. Beispiele hierfür sind Handstücke für elektrische Zahnbürsten, Taschenlampen sowie Bauteile von elektrischen Küchenmaschinen und Stabmixem.

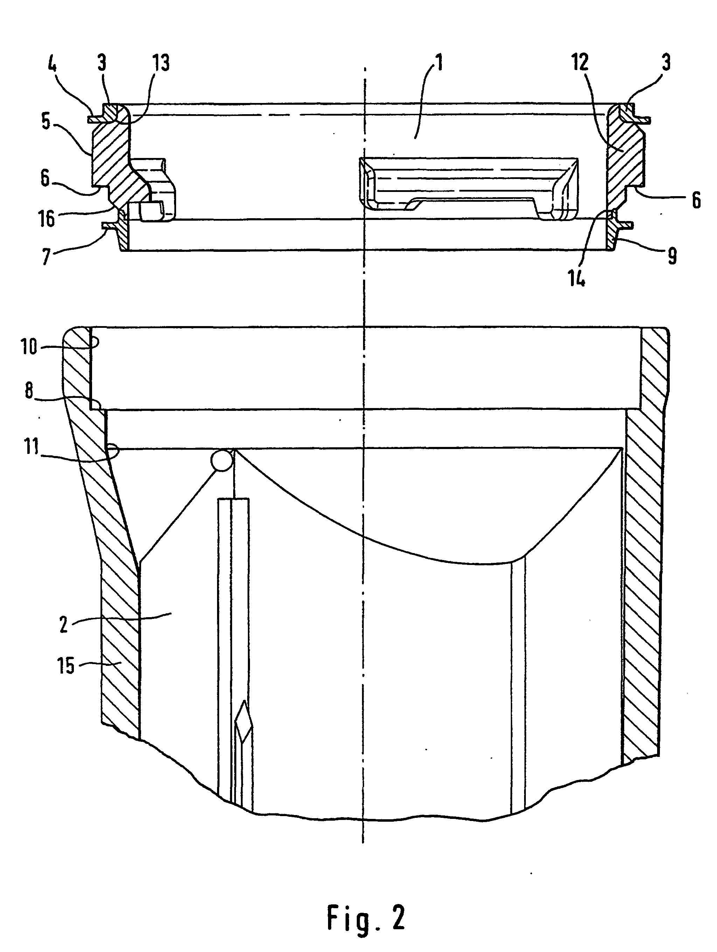

Aus der DE 42 44 017 A1 ist für einen Wasserkasten eine flüssigkeitsdichte Reibschweißverbindung durch eine axiale Vibrationsbewegungen zum Verbinden von Bauteilen aus thermoplastischem Kunststoff bekannt, bei der zumindest eines der zu verbindenden Bauteilen eine rigide Dichtlippe aufweist. Die Dichtlippe wirkt mit einem korrespondierenden Bauteil derart zusammen, daß zwischen den zu verbindenden Bauteilen zumindest ein Hohlraum ausgebildet ist, in dem durch den Schweißvorgang gelöste Schweißpartikel zurückgehalten werden. Um nach der DE 42 44 017 A1 die nötige Flüssigkeitsdichtigkeit zu erreichen, muß neben einer zentralen Schweißfläche (12, siehe Figur 2) beidseits jeweils ein rigider Steg 15, 16 vorhanden sein, deren Oberseiten 15' und 16' als Schweißflächen ausgebildet sind (siehe Spalte 6, Zeile 43-46). Beim Schweißvorgang erzeugen diese gleichfalls unerwünschte Schweißspäne, die in den Innerraum des Bauteils gelangen können.

Ähnliche Nachteile weist auch der Gegenstand der GB 2,217,255 auf, wie aus der Figur 9 ersichtlich ist, bei der die Rotationsschweißverbindung aus einer mittleren Schweißfläche (64) und diese umgebenden beidseitigen Schweißflächen an den rigiden Stegen (60) besteht, wobei letztere, um die Spalte 70 während des Schweißvorgangs zu schließen, zusammengedrückt und geschmolzen werden (siehe Seite 14, Zeile 4-5). Dabei werden gleichfalls Schweißspäne erzeugt, die aber wegen der als offene Kanäle bildende Spalte 70 während des Schweißvorgangs in den Innenraum bzw. in Richtung zur kosmetischen Außenfläche geschleudert werden. Des weiteren müssen die Stege in Vertiefungen 62 hineinragen, durch die die strukturelle Festigkeit im Schweibereich geschwächt wird.

Zwar offenbart die DE 37 00 981 A1 (entspricht US Pat. 4,919,987) ein Verfahren für die Verbindung von Teilen aus Polyamid durch Reibschweißen, bei dem während des Schweißvorgangs weggeschleuderte Späne von einer zähen, bei Wärmeeinwirkung schmelzenden plastischen Masse, also einer Art Haftmaterial, festgehalten werden sollen. Allerdings handelt es sich bei der in der DE 37 00 981 A1 vorgeschlagenen Lösung um ein aufwendiges Verfahren, bei dem nur teilweise der gewünschte Erfolg herbeigeführt wird. Bei diesem Verfahren wird die plastische Masse beim Schweißvorgang in einen Spalt oder eine entsprechende Vertiefung verdrängt, in dem/der die Späne aufgenommen werden sollen. Nachteilig ist hier zum einen die erforderliche besondere Beschichtung mit einem Material, welches nach dem Erwärmen während des Reibschweißvorgangs eine entsprechende Haftfläche erzeugt. Femer werden dabei nur Späne festgehalten, die tatsächlich mit diesem Haftmaterial in Berührung geraten. Sofem das Haftmaterial noch nicht verflüssigt ist, d.h. insbesondere in der Anfangsphase des Reibvorgangs, werden überhaupt keine Späne festgehalten.

### Zusammenfassung der vorliegenden Erfindung

Der vorliegenden Erfindung liegt daher die Aufgabe zugrunde, eine einfache und kostengünstige Reibschweißverbindung von Bauteilen aus thermoplastischem Kunststoff zu schaffen, bei der das Wegschleudern von Spänen, insbesondere in das Innere eines aus mehreren Teilen zusammengesetzten Behälterkörpers, mit großer Sicherheit verhindert wird. Insbesondere sollen dabei die Nachteile des Standes der Technik vermieden werden.

Diese Aufgabe wird durch eine Reibschweißverbindung zum Verbinden von Bauteilen aus thermoplastischem Kunststoff mit den Merkmalen des Patentanspruchs 1 sowie ein Verfahren zu deren Herstellung mit den Merkmalen des Patentanspruchs 14 gelöst. Vorteilhafte Ausgestaltungen der Erfindung werden in den Unteransprüchen beschrieben.

Durch die jeweilige erfindungsgemäße Ausführungsform nach Patentanspruch 1 wird eine einfache und kostengünstige Reibschweißverbindung von Bauteilen aus thermoplastischem Kunststoff geschaffen, bei der das Wegschleudern von Spänen, insbesondere in das Innere eines aus mehreren Bauteilen zusammengesetzten Behälterkörpers, mit großer Sicherheit verhindert wird. Insbesondere werden dabei die Nachteile des Standes der Technik vermieden.

Durch die erfindungsgemäße Lösung wird insbesondere eine Möglichkeit geschaffen, das Eindringen von Kunststoffpartikeln, die während oder nach dem Schweißvorgang aus der Schweißzone gelöst werden, in das Innere des Behälterkörpers auch in der Anfangsphase des Reibvorganges zu verhindern, unabhängig davon, welchen Weg die Partikel nehmen. Als konkrete Ausgestaltung kann man sich dabei zylinderförmige Bauteile mit Prallwänden oder Rippen vorstellen, bei denen ein erstes zu verbindendes Bauteil in ein zweites Bauteil hineingeschoben wird und dieses an einer vorgesehenen Schweißzone berührt. Hierdurch stehen sich die Außenflächen des ersten Bauteils und die Innenflächen des zweiten Bauteils gegenüber, wodurch bereits ein durch die Schweißzone und die genannten Wandungen gebildeter ringförmiger Hohlraum entsteht, der jeweils an einem Ende eine Öffnung aufweist. Diese Öffnung wird erfindungsgemäß durch eine elastische Dichtlippe bzw. vorzugsweise durch elastische Dichtlippen verschlossen, die aufgrund ihrer Elastizität während der Rotations- bzw. Oszillationsbewegung nachgeben und durch diese Bewegung nur eine minimale Temperaturerhöhung erfahren.

Eine entsprechende weitere Konstellation läßt sich beispielsweise durch ein U-Profil erzielen, an dessen offener Seite ein Flachprofil mit entsprechenden Dichtlippen eingefügt wird. Aber natürlich sind auch andere konstruktive Ausgestaltungen denkbar. Wichtig ist jedenfalls, daß aufgrund des Abdichtens vor und hinter der Schweißzone jeweils die während und nach dem Schweißvorgang ausgelösten Schweißpartikel in den so geschaffenen vollständig verschlossenen Hohlräumen vollständig und für die Lebensdauer des Bauteils zurückgehalten werden, wodurch sie nicht in das Behälterinnere eindringen und dort gegebenenfalls entsprechenden Schaden anrichten können. Befindet sich aber die Schweißzone an einem wenigen sichtbaren Teil, wie beispielsweise einem Gehäuseboden, der unwesentlichen gestalterischen Erfordernissen unterliegt, kann kostengünstig eine einzige Dichtlippe ausreichen, damit eventuel auftretender Schweißgrat nicht in das Gehäuseinnere eindringt, jedoch nach außen austreten darf. Typische Anwendungen sind beispielsweise beim Kartuschenschweißen und Einschweißen von Teilen in runde Gehäusebereiche thermoplastischer Kunststoffhohlkörper zu finden.

In einer Ausführungsform der Lösung der vorliegenden Erfindung ist es vorgesehen, daß die elastische Dichtlippe während des Schweißvorgangs im wesentlichen ungeschmolzen bleibt und somit nicht einen Teil des Schweißnaht bildet. Hierdurch wird vermieden, daß die Trennwandung des Hohlraums selbst weitere Schweißpartikel oder -späne produziert, die in das Behälterinnere eindringen. Auch im Zusammenhang mit dieser Lösung ist die Anwendung von einer Dichtlippe aus Kunstoffmaterial, das eine Elastizität aufweist, wie nachfolgend beschrieben, möglich.

In einer alternativen Ausführungsform der Lösung der vorliegenden Erfindung ist es vorgesehen, daß die elastiche Dichtlippe aus einem Kunsstoffmaterial gebildet ist, welches eine höhere Elastizität aufweist als das Kunststoffmaterial eines der jeweiligen Grundkörper. Hierdurch wird auch bei hohen Drehzahlen bzw. hohen Schwingungsfrequenzen während des Reibschweißvorgangs eine entsprechende Nachgiebigkeit der Dichtlippen sichergestellt und verhindert, daß die Dichtlippen während des Reibschweißvorganges zu erweichen beginnen bzw. ungewollt mit der Bauteilwandung, an der sie entlang gleitet, verschweißt werden. Bevorzugt ist es, daß die Dichtlippe aus einem Kunststoffmaterial gebildet ist, welches eine höhere Elastizität aufweist als das Kunststoffmaterial des Grundkörpers an dem die Dichtlippe angeordnet ist, um noch besser eine Temperaturerhöhung der Dichtlippe während des Reibschweißvorganges zu vermeiden.

Femer sieht eine weitere vorteilhafte Ausbildungsform der vorliegenden Erfindung vor, daß die die Schweißzone bildenden Flächen der jeweiligen Grundkörper im Ausgangszustand einander berühren und dabei die Länge der Dichtlippe größer ist, als der Abstand zwischen dem freien Ende der Dichtlippe eines Bauteils und der von dieser Dichtlippe gegenüberstehenden Anrührungsfläche des anderen Bauteils. Hierdurch werden auch das Nachgeben der elastischen Dichtlippe und das Verschließen des Hohlraums sichergestellt.

Femer sieht eine weitere vorteilhafte Ausbildungsform der vorliegenden Erfindung vor, daß die Bauteile rotationssymmetrisch ausgebildet sind. Durch eine derartige Ausgestaltung läßt sich der Reibschweißvorgang durch einfaches Ausüben von Druck und einer Rotationsbewegung durchführen. Die Zentrierung der Bauteile zueinander ist dadurch wesentlich einfacher zu erreichen und Exzentrizitäten nach Beendigung der Rotationsbewegung, sobald die flüssige Kunststoffmasse erstarrt ist, können hierdurch vermieden werden.

Außerdem sieht eine vorteilhafte Weiterbildung der vorliegenden Erfindung vor, daß eine Dichtlippe an jedem Bauteil angeordnet ist. Hierdurch wird beispielsweise ermöglicht, daß an den zu verbindenden Bauteilen jeweils an der am einfachsten zugänglichen Stelle eine entsprechende Dichtlippe angebracht wird. Dies kann beispielsweise bei einer am Innenumfang eines Hohlzylinders vorgesehenen Dichtlippe der offene Endbereich desselben sein, wobei am Außenumfang des einzuführenden Ringkörpers die Dichtlippe dort angeordnet werden kann, wo sie im eingebauten Zustand unterhalb der Schweißzone, d.h. im Inneren des Kunststoffhohlkörpers angeordnet ist.

Noch eine weitere vorteilhafte Ausführungsform der vorliegenden Erfindung sieht vor, daß die Grundkörper der Bauteile aus Polypropylen, Polyäthylen oder Polyamid hergestellt sind. Dabei sind einige häufig verwendete thermoplastische Kunststoffe explizit aufgeführt. Dies soll jedoch nicht einschränkend, sondern lediglich beispielhaft verstanden werden, da natürlich auch alle weiteren geeigneten Kunststoffe berücksichtigt sein sollen.

Eine besonders vorteilhafte Variante liegt darin, daß die Dichtlippe einstückig mit dem Grundkörper des Bauteils ausgebildet ist. Dabei muß jedoch eine sorgfältige Abwägung zwischen den vom Kunststoffmaterial geforderten Reibschweißeigenschaften und der geforderten Elastizität der Dichtlippen getroffen werden. Bei Auswahl eines entsprechend geeigneten thermoplastischen Kunststoffes, der sowohl ausreichende elastische Eigenschaften für die Dichtlippen aufweist und gleichzeitig für eine Schweißverbindung durch Reibschweißen geeignet ist, können erhebliche Einsparungen erzielt werden.

In einer alternativen Ausgestaltung wird die Dichtlippe vorteilhafterweise im Mehrkomponenten-Spritzgußverfahren mit dem Bauteil hergestellt. Bei dieser vorteilhaften Variante können die für die jeweilige Funktion am besten geeignete Materialien ausgewählt werden, d.h. für die Dichtlippen entsprechend flexibles Kunststoffmaterial mit hohem Schmelzpunkt und für das Material des Grundkörpers entsprechend geeignetes Material für das Erstellen einer Reibschweißverbindung.

Eine weitere vorteilhafte Weiterbildung besteht darin, daß die Dichtlippe aus TPE Gummi oder Polytetraflouräthylen ("PTFE") hergestellt ist, bei dem lediglich beispielhaft eine Variante für die Materialwahl der Dichtlippen dargestellt ist, die bei einem entsprechenden Mehrkomponenten-Spritzgußverfahren zur Anwendung kommen kann.

Schließlich ist eine vorteilhafte Anwendung der erfindungsgemäßen Reibschweißverbindung darin zu erkennen, daß die Bauteile den Kunststoffhohlkörper eines Handstückgehäuses für einen elektrische Zahnbürste bilden. Dies ist insbesondere bei Kunststoffhohlkörpern mit Hinterschneidungen, Prallflächen oder Rippen bzw. bei entsprechenden Kunststoffhohlkörpern mit Getriebeeinheiten, Filtern oder ähnlichen vorteilhaft, da hierdurch kostenintensive Nacharbeiten, wie beispielsweise Ausspülen oder Absaugen des Hohlkörpers, verhindert werden können.

Ein vorteilhaftes Verfahren zum Erstellen einer Reibschweißverbindung weist schließlich die Merkmale des Patentanspruchs 14 auf. Dabei können beispielsweise bei dem Schritt des Zusammenfügens der zu verbindenden Bauteile im Falle von hohlzylindrischen Bauteilen diese ineinander geschoben werden, bis der innere Zylinderring auf einem entsprechenden Absatz des äußeren Zylinderrohrs aufsitzt, der dann als Schweißzone dient. Während des Zusammenfügens gibt die Dichtlippe bzw. geben die Dichtlippen nach und gleiten elastisch an der Innenwand des äußeren Zylinderkörpers entlang. Dabei bilden die Dichtlippen und die Außenummantelung des innenliegenden Zylinderrings und die Innenummantelung des außenliegenden Zylinderrohrs sowie die Schweißzone die Begrenzungen des Hohlraumes. Dieser Hohlraum kann beispielsweise, wenn die Außenfläche des Zylinderrings und die Innenwand des Zylinderkörpers als Paßflächen ausgebildet sind, durch einen Ringspalt definiert sein. Ein vorteilhaftes Ausführen des Verfahrens liegt darin, daß zwei elastische Dichtlippen in die gleiche Richtung nachgeben, um das Ineinanderschieben zu erleichtern.

Während des Reibschweißvorgangs werden die Kunststoffmaterialien des Zylinderrings und des Zylinderrohrs nur partiell in der Schweißzone erwärmt und verflüssigt. Hierbei können bereits Kunststoffpartikel aus der Schweißzone herausgeschleudert werden bzw. flüssige Kunststoffmasse abtropfen, die dann sofort erstarrt und einen Kunststoffpartikel bildet. Derartige Kunststoffpartikel werden dann in den entsprechend gebildeten vollständig umschlossenen Hohlräumen zurückgehalten. Nach Beenden des Reibschweißvorganges, d.h. nachdem der Druck aufgehoben und die Reibbewegung beendet worden ist, erstarrt die flüssige Kunststoffmasse in der jeweiligen Position. Bei erstarrten Kunststofftropfen kann eine spätere Erschütterungs- oder Vibrationsbewegung dazu führen, daß sich diese aus der Schweißzone nach einiger Zeit lösen. Dann werden auch diese Kunststoffpartikel in den entsprechenden Hohlräumen aufgefangen.

Weitere Ausgestaltungen und Vorteile der Erfindung werden durch die Beschreibung eines vorteilhaften Ausführungsbeispiets unter Bezugnahme auf die beigefügten Zeichnungen erläutert. Dabei bilden alle beschriebenen und/oder bildlich dargestellten Merkmale für sich oder in beliebiger, sinnvoller Kombination den Gegenstand der Erfindung, auch unabhängig von ihrer Zusammenfassung in den Ansprüchen oder deren Rückbeziehung.

### Beschreibung der Zeichnungen

Darin zeigen:
- Fig. 1: eine perspektivische Ansicht einer vorteilhaften Ausführungsform der vorliegenden Erfindung mit zwei zu verbindenden zylindrischen Bauteilen vor dem Reibschweißvorgang;
- Fig. 2: die vorteilhafte Ausführungsform aus Fig. 1 im Schnitt;
- Fig. 3: eine perspektivische Ansicht der vorteilhaften Ausführungsform nach Fig. 1 nach dem Verschweißen der beiden Bauteile; und
- Fig. 4: die vorteilhafte Ausführungsform im in Fig. 3 gezeigten Zustand im Schnitt.

### Ausführliche Beschreibung des vorteilhaften Ausführungsbeispiels

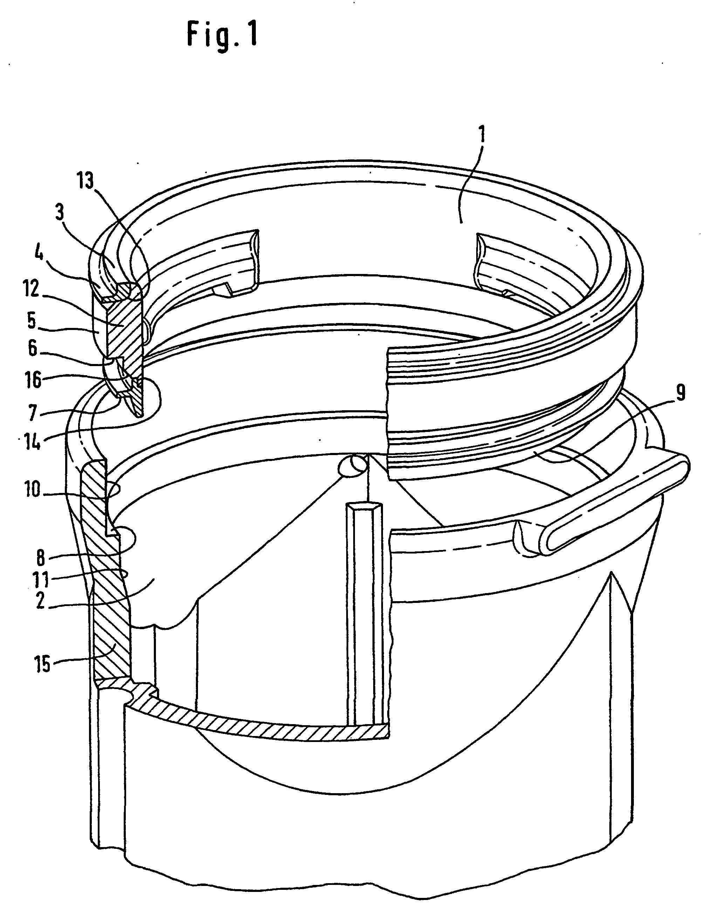

Fig. 1 zeigt eine perspektivische Ansicht einer vorteilhaften Ausführungsform der vorliegenden Erfindung vor dem Verschweißen. Dabei sind die an der Reibschweißverbindung beteiligten im wesentlichen zylinderförmig ausgebildeten Bauteile zum besseren Verständnis der Erfindung teilweise geschnitten dargestellt. Fig. 2 zeigt die Ausführungsform nach Fig. 1 im Schnitt.

Gemäß dem vorliegenden Ausführungsbeispiel ist ein kreisförmiger Einsatzring 1 vorgesehen, der jeweils an seinem oberen und an seinem unteren Ende als Ringnut ausgebildete Dichtringaufnahmen 13, 14 aufweist. Während der Einsatzring 1 einen Ringkörper 12 aus Polypropylen aufweist, sind der obere Dichtring 3 und der untere Dichtring 9, die jeweils in den Dichtringaufnahmen 13, 14 gehalten werden, aus thermoplastischem Elastomer, TPE, evtl. mit PTFE-Zusatz, hergestellt. Hierdurch werden gute Gleiteigenschaften der Dichtlippen 4, 7 gewährleistet und ein Erweichen derselben sicher vermieden. Der obere Dichtringe 3 und der untere Dichtring 9 weisen jeweils eine mit Bezug auf den Einsatzring 1 radial hervorstehende umlaufende Dichtlippe 4, 7 auf, die jeweils über den Außenumfang der glatten zylindrischen Außenwand 5 bzw. 5.1 des Einsatzrings 1 hervorsteht. Der obere Dichtring 3 weist dabei einen im wesentlichen L-förmigen Querschnitt auf, wie besonders gut aus Fig. 2 ersichtlich ist. Dabei ist der Scheitelpunkt der beiden Geraden in der Dichtringaufnahme 13 verankert. Der untere Dichtring 9 weist demgegenüber einen T-förmigen Querschnitt auf.

Der Ringkörper 12 weist einen im wesentlichen rechteckigen Querschnitt auf, der, wie bereits erwähnt, an seinem oberen äußeren Ende eine Dichtringaufnahme 13 aufweist. An seinem unteren Ende weist der Ringkörper 12 einen stufenförmigen Versatz nach innen auf, durch den eine der beiden Reibflächen 6 gebildet wird. Der Einsatzring 1 ist zusammen mit dem oberen Dichtring 3 und dem unteren Dichtring 9 im Mehrkomponenten-Spritzgußverfahren hergestellt.

Der im wesentlichen zylindrische Behälterkörper 2, der einen Zylinderkörper 15 aus Polypropylen aufweist, weist an seinem oberen Ende einen Innendurchmesser auf, der größer ist als der Außendurchmesser des Einsatzrings 1. Der Behälter 2 weist in diesem Bereich eine glatte Innenwand 10 auf. Diese Innenwand 10 setzt sich bis zu einem stufenförmigen umlaufenden Versatz fort, der die zweite Reibfläche 8 definiert. Die sich an die Reibfläche 8 anschließende Innenwand ist als Dichtfläche 11 für die Dichtlippe 7 des unteren Dichtrings 9 des Einsatzrings 1 ausgebildet. Die Außenwand 5 des Einsatzrings 1 und die Innenwand 10 des Behälters 2 sind dabei als entsprechende Paßflächen, beispielsweise einer Spielpassung, ausgebildet.

Bei Durchführung des Reibschweißverfahrens wird im vorliegenden Ausführungsbeispiel der Behälter 2 festgehalten, während der Einsatzring 1 konzentrisch in die Öffnung des Behälters 2 eingeführt wird, bis die ringförmig umlaufende plane Reibfläche 6 des Ringkörpers 12 des Einsatzrings 1 auf der Reibfläche 8 des Behälters 2 aufsitzt. Während des Ineinanderfügens des Einsatzrings 1 in den Behälter 2, gleiten die Dichtlippen 4, 7 der Dichtringe 3, 9 an der Innenwand 10 bzw. der Dichtfläche 11 des zylinderförmig ausgestalteten Behälters 2 entlang.

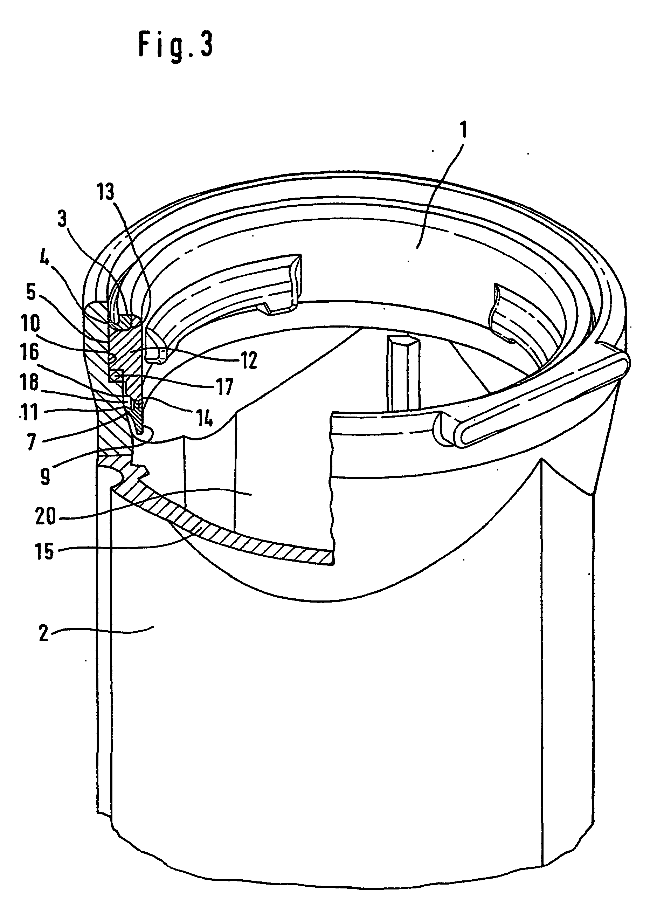

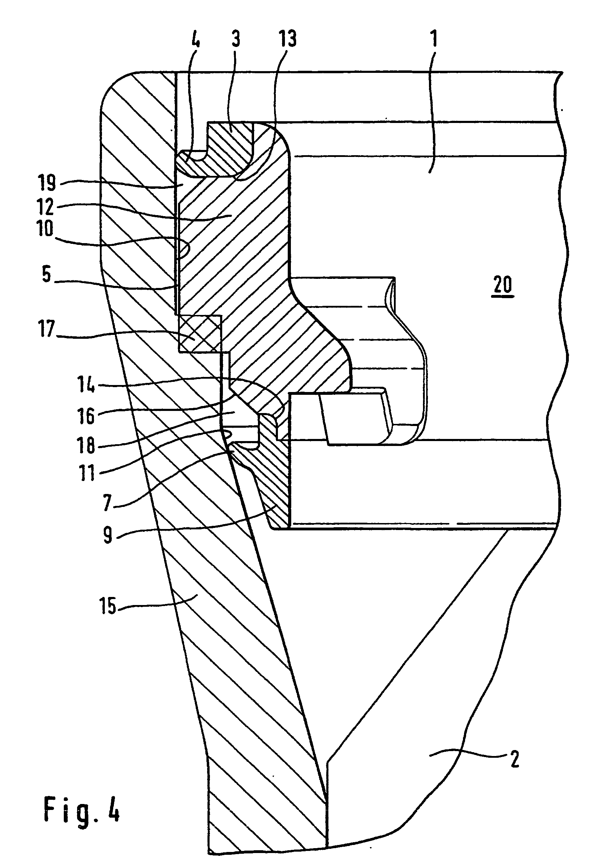

Dann wird von außen Druck auf den Einsatzring 1 ausgeübt, wodurch ein entsprechender Anpreßdruck der beiden Reibflächen 6 und 7 resultiert. Dieser Druck hat keinerlei Auswirkungen auf die Dichtlippen 4 und 7 der Dichtringe 3, 9. Durch die nun ebenfalls auf den Einsatzring 1 ausgeübte Oszillationsbewegung bzw. Rotationsbewegung, durch die der Einsatzring 1 und hier insbesondere seine Reibfläche 6 auf der Reibfläche 8 des Behälters 2 hin- und hergleitet, beginnt sich das Kunststoffmaterial des Ringkörpers 12 und des Zylinderkörpers 15 partiell im Bereich der durch die Reibflächen 6, 7 gebildeten Schweißzone 17 zu erwärmen. Die Dichtlippen 4, 7 gleiten dabei an der Innenwand 10 bzw. der Dichtfläche 11 des Zylinderkörpers 2 entlang und erwärmen sich nur unwesentlich. Nach Verflüssigen des Kunststoffmaterials in der durch die Reibflächen 6 und 7 gebildeten Schweißzone 17 und anschließendem Erstarren der flüssigen Kunststoffmassen, nachdem die Oszillationsbewegung bzw. Rotationsbewegung beendet und der Druck aufgehoben worden ist, stellt sich die Reibschweißverbindung wie in der perspektivischen Ansicht in Fig. 3 bzw. in der geschnittenen Ansicht in Fig. 4 dar.

Dabei bildet die Schweißzone 17 den Übergangsbereich, in dem der Einsatzring 1 mit dem Behälter 2 unlösbar verbunden ist. Zwischen der Außenwand 5 des Einsatzrings 1 und der Innenwand 10 des zylindrischen Behälterkörpers 2 sowie der Schweißzone 17 und der Dichtlippe 4 des oberen Dichtrings 3 ist dabei ein vollständig abgeschlossener ringförmiger Hohlraum 19 ausgebildet, in dem jegliche aus der Schweißzone 17 herausgeschleuderten Kunststoffpartikel zurückgehalten werden. Die Dichtlippe 4 liegt dabei, wie insbesondere aus Fig. 4 ersichtlich, leicht verformt an der Innenwand 10 des Behälters 2 an. Im unteren Bereich wird ein weiterer abgeschlossener ringförmiger Hohlraum 18 durch die Schweißzone 17, die Dichtlippe 7 des unteren Dichtrings 9 sowie die Dichtfläche 11 des Behälters 2 und eine Fase 16 des Ringkörpers 12 des Einsatzrings 1 begrenzt. Auch hier werden aus der Schweißzone 17 heraus verdrängte Kunststoffpartikel oder -späne aufgefangen und endgültig festgehalten. Ein Eindringen derartiger Kunststoffpartikel in das Behälterinnere 20 wird dadurch sicher vermieden.

## Patentansprüche

1. Reibschweißverbindung zum Verbinden von Bauteilen aus thermoplastischem Kunststoff, wobei zumindest eines der zu verbindenden Bauteile (1) zumindest eine Dichtlippe (4, 7) aufweist, die mit einem korrespondierenden Bauteil (2) derart zusammenwirkt, daß zwischen den zu verbindenden Bauteilen (1, 2) zumindest ein Hohlraum (18, 19) ausgebildet ist, in dem durch den Schweißvorgang gelöste Schweißpartikel zurück gehalten werden,
**dadurch gekennzeichnet,**
**daß** die Dichtlippe (4, 7) elastisch ausgebildet ist, so daß sie während des Schweißvorgangs im wesentlichen ungeschmolzen bleibt.

2. Reibschweißverbindung zum Verbinden von Bauteilen aus thermoplastischem Kunststoff nach Anspruch 1,
**dadurch gekennzeichnet,**
**daß** jedes Bauteil (1, 2) einen Grundkörper (12, 15) aufweist, und daß die Dichtlippe (4, 7) elastisch ausgebildet ist und aus einem Kunststoffmaterial gebildet ist, welches eine höhere Elastizität aufweist als das Kunststoffmaterial eines der jeweiligen Grundkörper (12, 15).

3. Reibschweißverbindung zum Verbinden von Bauteilen aus thermoplastischem Kunststoff nach Anspruch 1 oder 2,
**dadurch gekennzeichnet,**
**daß**, die die Schweißzone bildenden Flächen (6, 8) der jeweiligen Grundkörper (12, 15) im Ausgangszustand einander berühren und dabei die Länge der Dichtlippe (4, 7) größer ist, als der Abstand zwischen dem freien Ende der Dichtlippe (4, 7) eines Bauteils (1) und der von dieser Dichtlippe (4, 7) gegenüberstehenden Anrührungsfläche des anderen Bauteils (2).

4. Reibschweißverbindung zum Verbinden von Bauteilen aus thermoplastischem Kunststoff nach Anspruch 1 oder 3,
**dadurch gekennzeichnet,**
**daß** die Dichtlippe(n) (4, 7) aus einem Kunststoffmaterial gebildet ist (sind), welches eine höhere Elastizität aufweist als das Kunststoffmaterial eines der jeweiligen Grundkörper (12, 15).

5. Reibschweißverbindung zum Verbinden von Bauteilen aus thermoplastischem Kunststoff nach einem der vorangehenden Ansprüche,
**dadurch gekennzeichnet,**
**daß** die Dichtlippe(n) (4, 7) aus einem Kunststoffmaterial gebildet ist (sind), welches eine höhere Elastizität aufweist als das Kunststoffmaterial des Grundkörpers (12) an dem sich die Dichtlippe (4, 7) bzw. die Dichtlippen angeordnet ist.

6. Reibschweißverbindung zum Verbinden von Bauteilen aus thermoplastischem Kunststoff nach einem der vorangehenden Ansprüche,
**dadurch gekennzeichnet,**
**daß** eine aus einander berührenden Flächen der jeweiligen Bauteilen entstehende Schweißzone (17) sich zwischen zwei Dichtlippen (4, 7) befindet, wobei Hohlräume beidseits der Schweißzone (17) ausgebildet sind.

7. Reibschweißverbindung zum Verbinden von Bauteilen aus thermoplastischem Kunststoff nach einem der vorangehenden Ansprüche,
**dadurch gekennzeichnet,**
**daß** die zu verbindenden Bauteile (1, 2) rotationssymmetrisch ausgebildet sind.

8. Reibschweißverbindung zum Verbinden von Bauteilen aus thermoplastischem Kunststoff nach einem der vorangehenden Ansprüche,
**dadurch gekennzeichnet,**
**daß** jedes der zu verbindenden Bauteile (1, 2) die zumindest eine Dichtlippe aufweisen.

9. Reibschweißverbindung zum Verbinden von Bauteilen aus thermoplastischem Kunststoff nach einem der vorangehenden Ansprüche,
**dadurch gekennzeichnet,**
**daß** die Grundkörper (12, 15) der Bauteile (1, 2) aus Polypropylen, Polyäthylen, Polyamid oder jedem anderen geeigneten thermoplastischen Kunststoffmaterial hergestellt sind.

10. Reibschweißverbindung zum Verbinden von Bauteilen aus thermoplastischem Kunststoff nach einem der vorangehenden Ansprüche,
**dadurch gekennzeichnet,**
**daß** die zumindest eine Dichtlippe einstückig mit dem Grundkörper des Bauteils ausgebildet ist.

11. Reibschweißverbindung zum Verbinden von Bauteilen aus thermoplastischem Kunststoff nach einem der Ansprüche 1 bis 9,
**dadurch gekennzeichnet,**
**daß** zumindest das Bauteil (1), welches die zumindest eine Dichtlippen (4, 7) aufweist, im Mehrkomponenten-Spritzgußverfahren hergestellt ist.

12. Reibschweißverbindung zum Verbinden von Bauteilen aus thermoplastischem Kunststoff nach einem der Ansprüche 1 bis 9 oder 11,
**dadurch gekennzeichnet,**
**daß** die zumindest eine Dichtlippe (4, 7) aus TPE Gummi oder Polytetrafluoräthylen hergestellt ist.

13. Verwendung einer Reibschweißverbindung zum Verbinden von Bauteilen aus thermoplastischem Kunststoff nach einem der vorangehenden Ansprüche zum Herstellen eines Kunststoffhohlkörpers eines Handstückgehäuses für eine elektrische Zahnbürste.

14. Verfahren zum Erstellen einer Reibschweißverbindung zum Verbinden zumindest zweier Bauteile aus thermoplastischem Kunststoff, wobei zumindest eines der beiden Bauteile zumindest eine elastische Dichtlippe aufweist und wobei das Verfahren folgende Schritte aufweist:
Zusammenfügen der zu verbindenden Bauteile, wobei sich diese an einer Schweißzone berühren und wobei ein Hohlraum gebildet wird, der durch Wandungen der Bauteile, die Schweißzone und die Dichtlippe begrenzt wird;
Ausüben von Druck und von einer Oszillations- oder Rotationsbewegung auf zumindest eines der Bauteile, bis sich der Kunststoff in der Schweißzone verflüssigt;
Nachgeben der elastischen Dichtlippe;
Entlanggleiten der elastischen Dichtlippe an der Wandung eines der Bauteile;
Auffangen der während oder nach dem Reibschweißvorgang gelösten Kunststoffpartikel in dem Hohlraum;
Beenden der Oszillations- bzw. Rotationsbewegung und Erkalten der Schweißzone, wodurch die zu verbindenden Bauteile fest miteinander verbunden werden.

15. Verfahren zum Erstellen einer Reibschweißverbindung nach Anspruch 14, wobei, während des Ausübens von Druck und der relativen Bewegung, die elastische Dichtlippe im wesentlichen nicht verflüssigt wird.

16. Verfahren zum Erstellen einer Reibschweißverbindung nach Anspruch 14, wobei die Schweißzone zwischen zwei Dichtlippen liegt, und, während des Nachgeben, die beiden Dichtlippen in die gleiche Richtung nachgeben.

## Claims

1. Friction-welded joint for joining components made of thermoplastic material, at least one of the components (1) to be joined having at least one sealing lip (4, 7), which co-operates with a corresponding component (2) in such a way that between the components (1, 2) to be joined there is formed at least one cavity (18, 19) in which welding particles detached by the welding operation are retained, **characterized in that** the sealing lip (4, 7) is formed in an elastic manner, so that it remains substantially unmelted during the welding operation.

2. Friction-welded joint for joining components made of thermoplastic material according to Claim 1, **characterized in that** each component (1, 2) has a basic body (12, 15), and **in that** the sealing lip (4, 7) is formed in an elastic manner and is formed from a plastics material which has a greater elasticity than the plastics material of one of the respective basic bodies (12, 15).

3. Friction-welded joint for joining components made of thermoplastic material according to Claim 1 or 2, **characterized in that** the surfaces (6, 8) of the respective basic bodies (12, 15) forming the welding zone are in contact with one another in the initial state and at the same time the length of the sealing lip (4, 7) is greater than the distance between the free end of the sealing lip (4, 7) of one component (1) and the contact surface of the other component (2) that is opposite this sealing lip (4, 7).

4. Friction-welded joint for joining components made of thermoplastic material according to Claim 1 or 3, **characterized in that** the sealing lip(s) (4, 7) is (are) formed from a plastics material which has a greater elasticity than the plastics material of one of the respective basic bodies (12, 15).

5. Friction-welded joint for joining components made of thermoplastic material according to one of the preceding claims, **characterized in that** the sealing lip(s) (4, 7) is (are) formed from a plastics material which has a greater elasticity than the plastics material of the basic body (12) on which the sealing lip (4, 7) or the sealing lips is arranged.

6. Friction-welded joint for joining components made of thermoplastic material according to one of the preceding claims, **characterized in that** a welding zone (17) produced by surfaces of the respective components in contact with one another is located between two sealing lips (4, 7), cavities being formed on both sides of the welding zone (17).

7. Friction-welded joint for joining components made of thermoplastic material according to one of the preceding claims, **characterized in that** the components (1, 2) to be joined are formed in a rotationally symmetrical manner.

8. Friction-welded joint for joining components made of thermoplastic material according to one of the preceding claims, **characterized in that** the each of the components (1, 2) to be joined which have at least one sealing lip [sic].

9. Friction-welded joint for joining components made of thermoplastic material according to one of the preceding claims, **characterized in that** the basic bodies (12, 15) of the components (1, 2) are produced from polypropylene, polyethylene, polyamide or some other suitable thermoplastic material.

10. Friction-welded joint for joining components made of thermoplastic material according to one of the preceding claims, **characterized in that** the at least one sealing lip is formed in one piece with the basic body of the component.

11. Friction-welded joint for joining components made of thermoplastic material according to one of Claims 1 to 9, **characterized in that** at least the component (1) which has the at least one sealing lips [sic] (4, 7) is produced by the multicomponent injection-moulding process.

12. Friction-welded joint for joining components made of thermoplastic material according to one of Claims 1 to 9 or 11, **characterized in that** the at least one sealing lip (4, 7) is produced from TPE rubber or polytetrafluoroethylene.

13. Use of a friction-welded joint for joining components made of thermoplastic material according to one of the preceding claims for producing a hollow plastic body of a handle housing for an electric toothbrush.

14. Method for producing a friction-welded joint for joining at least two components made of thermoplastic material, at least one of the two components having at least one elastic sealing lip and the method having the following steps:
joining together the components to be joined, the latter contacting one another at a welding zone and a cavity which is delimited by walls of the components, the welding zone and the sealing lip being formed;
exertion of pressure and an oscillating or rotating movement on at least one of the components until the plastic becomes liquid in the welding zone;
yielding of the elastic sealing lip;
sliding of the elastic sealing lip along the wall of one of the components;
capturing of the particles of plastic detached during or after the friction-welding operation in the cavity;
ending of the oscillating or rotating movement and cooling down of the welding zone, whereby the components to be joined are firmly joined to one another.

15. Method for producing a friction-welded joint according to Claim 14, the elastic sealing lip substantially not becoming liquid during the exertion of pressure and the relative movement.

16. Method for producing a friction-welded joint according to Claim 14, the welding zone lying between two sealing lips, and the two sealing lips yielding in the same direction during the yielding.

## Revendications

1. Liaison par soudage par friction pour relier des composants en matière thermoplastique, au moins un des composants (1) à relier présentant une lèvre d'étanchéité (4, 7) qui coopère avec un composant (2) correspondant de telle sorte qu'entre les composants (1, 2) à relier est formée au moins une cavité (18, 19) dans laquelle des particules de soudage détachées par l'opération de soudage sont retenues, **caractérisée en ce que** la lèvre d'étanchéité (4, 7) est réalisée élastique de telle sorte qu'elle reste sensiblement non fondue pendant l'opération de soudage.

2. Liaison par soudage par friction pour relier des composants en matière thermoplastique selon la revendication 1, **caractérisée en ce que** chaque composant (1, 2) présente un corps de base (12, 15) et **en ce que** la lèvre d'étanchéité (4, 7) est réalisée élastique et est constituée d'une matière plastique qui présente une élasticité plus grande que la matière plastique d'un des corps de base (12, 15) respectifs.

3. Liaison par soudage par friction pour relier des composants en matière plastique thermoplastique selon l'une ou l'autre des revendications 1 et 2, **caractérisée en ce que** les surfaces (6, 8) de chaque corps de base (12, 15), formant la zone de soudage, se touchent à l'état initial, et la longueur de la lèvre d'étanchéité (4, 7) est ici plus grande que la distance entre l'extrémité libre de la lèvre d'étanchéité (4, 7) d'un composant (1) et la surface de contact opposée à cette lèvre d'étanchéité (4, 7), de l'autre composant (2).

4. Liaison par soudage par friction pour relier des composants en matière thermoplastique selon l'une ou l'autre des revendications 1 et 3, **caractérisée en ce que** la/les lèvre(s) d'étanchéité (4, 7) est/sont formée(s) en une matière plastique qui présente une élasticité supérieure à la matière plastique d'un des corps de base (12, 15) respectifs.

5. Liaison par soudage par friction pour relier des composants en matière thermoplastique selon l'une quelconque des revendications précédentes, **caractérisée en ce que** la/les lèvre(s) d'étanchéité (4, 7) est/sont formée(s) en une matière plastique qui présente une élasticité supérieure à la matière plastique du corps de base (12) sur lequel est/sont agencée(s) la/les lèvres d'étanchéité (4, 7).

6. Liaison par soudage par friction pour relier des composants en matière thermoplastique selon l'une quelconque des revendications précédentes, **caractérisée en ce qu'**une zone de soudage (17) formée par des surfaces se touchant mutuellement, des composants respectifs, se trouve entre deux lèvres d'étanchéité (4, 7), des cavités étant réalisées des deux côtés de la zone de soudage (17).

7. Liaison par soudage par friction pour relier des composants en matière thermoplastique selon l'une quelconque des revendications précédentes, **caractérisée en ce que** les composants (1, 2) à relier sont réalisés à symétrie de révolution.

8. Liaison par soudage par friction pour relier des composants en matière thermoplastique selon l'une quelconque des revendications précédentes, **caractérisée en ce que** chacun des composants (1, 2) à relier présente ladite au moins une lèvre d'étanchéité.

9. Liaison par soudage par friction pour relier des composants en matière thermoplastique selon l'une quelconque des revendications précédentes, **caractérisée en ce que** les corps de base (12, 15) des composants (1, 2) sont fabriqués en polypropylène, en polyéthylène, en polyamide ou en toute autre matière thermoplastique appropriée.

10. Liaison par soudage par friction pour relier des composants en matière thermoplastique selon l'une quelconque des revendications précédentes, **caractérisée en ce que** ladite au moins une lèvre d'étanchéité est réalisée d'un seul tenant avec le corps de base du composant.

11. Liaison par soudage par friction pour relier des composants en matière thermoplastique selon l'une quelconque des revendications 1 à 9, **caractérisée en ce qu'**au moins le composant (1) qui présente ladite au moins une lèvre d'étanchéité (4, 7) est fabriqué par procédé de moulage par injection à plusieurs composants.

12. Liaison par soudage par friction pour relier des composants en matière thermoplastique selon l'une quelconque des revendications 1 à 9 ou 11, **caractérisée en ce que** ladite au moins une lèvre d'étanchéité (4, 7) est fabriquée en caoutchouc TPE ou en polytétrafluoréthylène.

13. Utilisation d'une liaison par soudage par friction pour relier des composants en matière thermoplastique selon l'une des revendications précédentes, pour fabriquer un corps creux en matière plastique d'un boîtier d'une pièce à main pour une brosse à dents électrique.

14. Procédé pour réaliser une liaison par soudage par friction pour relier au moins deux composants en matière thermoplastique, au moins un des deux composants présentant au moins une lèvre d'étanchéité élastique et le procédé comprenant les étapes suivantes :
on assemble des composants à relier, ceux-ci se touchant dans une zone de soudage, et il se forme une cavité délimitée par des parois des composants, par la zone de soudage et par la lèvre d'étanchéité ;
on exerce une pression et un mouvement d'oscillation et de rotation sur au moins un des composants jusqu'à ce que la matière plastique se liquéfie dans la zone de soudage ;
la lèvre d'étanchéité élastique cède ;
la lèvre d'étanchéité élastique glisse le long de la paroi de l'un des composants ;
les particules de matière plastique qui se sont détachées pendant ou après l'opération de soudage par friction sont recueillies dans la cavité ;
le mouvement d'oscillation et de rotation est terminé, et la zone de soudage est refroidie, grâce à quoi les composants à relier sont reliés de manière solidaire l'un à l'autre.

15. Procédé pour réaliser une liaison par soudage par friction selon la revendication 14, dans lequel pendant que l'on exerce une pression et pendant le mouvement relatif, la lèvre d'étanchéité élastique n'est sensiblement pas liquéfiée.

16. Procédé pour réaliser une liaison par soudage par friction selon la revendication 14, dans lequel la zone de soudage est située entre deux lèvres d'étanchéité et, pendant qu'elles cèdent, les deux lèvres d'étanchéité cèdent dans la même direction.
